# EUROPÄISCHE PATENTSCHRIFT

(11) **EP 2 788 976 B1**
(45) Veröffentlichungstag und Bekanntmachung des Hinweises auf die Patenterteilung: **25.04.2018**
(21) Anmeldenummer: 12780136.3
(22) Anmeldetag: 11.10.2012
(51) Int. Cl.: G10K 11/178, B60Q 5/00

(54) **VERFAHREN UND VORRICHTUNG ZUM VERSTÄRKEN EINES IN EINE FAHRGASTZELLE EINES KRAFTFAHRZEUGS EINGELEITETEN GERÄUSCHS**
METHOD AND APPARATUS FOR AMPLIFYING A NOISE SOUND INTRODUCED INTO THE PASSENGER COMPARTMENT OF A VEHICLE
MÉTHODE ET DISPOSITIF POUR AMPLIFIER UN BRUIT ACOUSTIQUE INTRODUIT DANS L'HABITACLE D'UN VÉHICULE

(30) Priorität: 05.12.2011 DE 102011087765
(43) Veröffentlichungstag der Anmeldung: 15.10.2014
(73) Patentinhaber: Robert Bosch GmbH, 70442 Stuttgart (DE)
(72) Erfinder: KOBIELA, Fanny, 74399 Walheim (DE); SCHNIEDERTOENS, Thomas, 70178 Stuttgart (DE); MITTANK, Stefan, 70437 Stuttgart (DE)
(86) Internationale Anmeldenummer: PCT/EP2012/070185
(87) Internationale Veröffentlichungsnummer: WO 2013/083321

(56) Entgegenhaltungen:
- AT-A2- 508 606
- DE-A1- 19 701 801
- US-A1- 2010 266 135
- US-A1- 2011 175 718

## Beschreibung

Die vorliegende Erfindung betrifft ein Verfahren zum Verstärken eines in eine Fahrgastzelle eines Kraftfahrzeugs, insbesondere eines elektrisch angetriebenen Kraftfahrzeugs, eingeleiteten Geräuschs, das von einer außerhalb der Fahrgastzelle angeordneten Schallquelle erzeugt wird.

Ferner betrifft die vorliegende Erfindung eine Vorrichtung zum Verstärken eines in eine Fahrgastzelle eines Kraftfahrzeugs, insbesondere eines elektrisch angetriebenen Kraftfahrzeugs, eingeleiteten Geräuschs.

### Stand der Technik

Auf dem Gebiet der Kraftfahrzeugsantriebstechnik ist es allgemein bekannt, eine oder mehrere elektrische Maschinen als alleinigen Antrieb oder gemeinsam mit einem Antriebsmotor eines anderen Typs (Hybridantrieb) zu verwenden. Typischerweise bestehen Hybridantriebe aus einer Kombination von einer Brennkraftmaschine und mindestens einer elektrischen Maschine sowie den zugehörigen Energiespeichern in Form eines Kraftstofftanks sowie einer Batterie.

Eine Charakteristik der rein elektrisch angetriebenen Fahrzeuge ist es, dass sie ein deutlich leiseres Fahr- und Betriebsgeräusch als konventionell angetriebene Fahrzeuge erzeugen. So generieren sie nur ein sehr leises Motorengeräusch. Ansaug-, Verbrennungs- oder Auspuffgeräusche existieren prinzipbedingt nicht. Dies gilt in gleicher Weise für Fahrzeuge mit Hybridantrieb, falls sie (z.B. bei geringen Geschwindigkeiten) im rein elektrischen Fahrmodus betrieben werden. Diese leiseren Fahr- und Betriebsgeräusche sind auf der einen Seite im Sinne eines reduzierten Straßenverkehrslärms sehr wünschenswert. Damit steigt die Lebensqualität in Großstädten, insbesondere entlang der stark befahrenen Straßen. Auf der anderen Seite dient dieses Fahrzeuggeräusch jedoch als Warnsignal für ein sich näherndes Fahrzeug. Das Außengeräusch von Elektrofahrzeugen ist aber bei kleinen Geschwindigkeiten so gering, dass die Fahrzeuge insbesondere von Menschen mit Sehbehinderung bzw. bei reduzierter Aufmerksamkeit nicht mehr wahrgenommen werden und es infolgedessen zu Fahrzeug-Personen-Unfällen kommen kann.

Derzeit werden weltweit Systeme für den Einbau in Elektrofahrzeuge diskutiert, die ein zusätzliches, elektronisch erzeugtes Geräusch bei geringen Geschwindigkeiten über ein Lautsprechersystem abgeben, um die in der Nähe befindlichen Verkehrsteilnehmer, wie z.B. Radfahrer oder Fußgänger, vor dem herannahenden Fahrzeug zu warnen. Zur aktiven Erzeugung eines Außengeräuschs sind aber auch andere Systeme denkbar, wie der Einsatz von anderen Schwingungserzeugern oder die gezielte Ansteuerung der elektrischen Maschine oder von Nebenaggregaten im Fahrzeug.

Außerdem werden zur Wahrung der Verkehrssicherheit momentan Vorschriften oder Richtlinien zur aktiven Außengeräuscherzeugung im niedrigen Geschwindigkeitsbereich ausgearbeitet, die eine Wahrnehmbarkeit dieser Fahrzeuge für Fußgänger, Radfahrer oder andere Verkehrsteilnehmer gewährleisten sollen.

Auf der anderen Seite trägt das leise Innengeräusch beim elektrischen Fahren wesentlich zum Komfortempfinden des Fahrers bei. Es ist zu erwarten, dass dieser Komfortaspekt auch aus Sicht der Fahrzeughersteller als besonderer Vorteil gegenüber Diesel/Benzinfahrzeugen aufrechterhalten werden soll. Dies betrifft besonders geringe Geschwindigkeitsbereiche; bei hohen Geschwindigkeiten werden Roll- und Windgeräusche auch innen hörbar.

Daher ist es wünschenswert, Maßnahmen zur aktiven Außengeräuscherzeugung gleichzeitig gegenüber dem Fahrzeuginnenraum abzuschirmen, um den Fahrkomfort nicht einzuschränken. AT 508 606 A2 offenbart eine Vorrichtung zum Verstärken eines Motorgeräusches im Innenraum und Außenraum eines Elektrofahrzeugs mit einem außerhalb der Fahrgastzelle angeordneten Lautsprecher und einem innerhalb der Fahrgastzelle angeordneten Lautsprecher.

### Offenbarung der Erfindung

Die vorliegende Erfindung stellt daher ein Verfahren gemäß dem Anspruch 1 zum Verstärken eines in eine Fahrgastzelle eines Kraftfahrzeugs, insbesondere eines elektrisch angetriebenen Kraftfahrzeugs, eingeleiteten Geräuschs, das von einer außerhalb der Fahrgastzelle angeordneten Schallquelle erzeugt wird, bereit, wobei ein Korrektursignal mittels Korrektursignalmitteln, die der Schallquelle und/oder einer schallweiterleitenden Struktur des Kraftfahrzeugs zugeordnet sind, erzeugt wird, und wobei das Korrektursignal so bestimmt wird, dass das Geräusch gedämpft oder verstärkt in die Fahrgastzelle eingeleitet wird.

Ferner stellt die vorliegende Erfindung eine Vorrichtung gemäß dem Anspruch 5 zum Verstärken eines in eine Fahrgastzelle eines Kraftfahrzeugs, insbesondere eines elektrisch angetriebenen Kraftfahrzeugs, eingeleiteten Geräuschs, bereit, mit Korrektursignalmitteln, die einer außerhalb der Fahrgastzelle angeordneten Schallquelle und/oder einer schallweiterleitenden Struktur des Kraftfahrzeugs zugeordnet sind, wobei die Korrektursignalmittel dazu eingerichtet sind, ein Korrektursignal derart zu erzeugen, dass das von der Schallquelle erzeugte Geräusch gedämpft oder verstärkt in die Fahrgastzelle eingeleitet wird.

### Vorteile der Erfindung

Mit Hilfe der vorliegenden Erfindung wird der Fahrkomfort in der Fahrgastzelle eines elektrisch angetriebenen Kraftfahrzeugs erhöht, indem ein Teil des aktiv erzeugten künstlichen Außengeräuschs, der in die Fahrgastzelle eingeleitet wird, verstärkt wird. Dabei findet die Verstärkung des in die Fahrgastzelle eingeleiteten Geräuschs direkt an der Schallquelle und/oder an der schallweiterleitenden Struktur des Kraftfahrzeugs statt. Als schallweiterleitende Struktur wird diejenige Struktur definiert, die im Wesentlichen für die Geräuschübertragung des Geräuschs in die Fahrgastzelle des Kraftfahrzeugs verantwortlich ist. Diese erfindungsgemäße Anordnung der Korrektursignalmittel ermöglicht eine sehr effiziente Beeinflussung der Geräuschübertragung in die Fahrgastzelle.

Die vorliegende Erfindung ermöglicht somit, dass das Geräusch verstärkt in die Fahrgastzelle eingeleitet wird. Damit wird das Geräusch verstärkt in die Fahrgastzelle eingeleitet, wenn beispielsweise eine Gefahrensituation vorliegt.

Des Weiteren können durch die erfindungsgemäße Modifikation des Geräuschs weitere Maßnahmen zur passiven akustischen Dämmung (wie z.B. Dämmmaterialien) reduziert werden. Damit tragen das erfindungsgemäße Verfahren und die erfindungsgemäße Vorrichtung zur Kostensenkung bei.

Von besonderem Vorzug ist es, wenn das Korrektursignal auf der Grundlage von Daten einer zentralen Steuereinheit bestimmt wird, die zum Steuern der Schallquelle verwendet werden.

Aufgrund der Daten aus der zentralen Steuereinheit ist das außerhalb der Fahrgastzelle erzeugte Geräusch hinreichend in Echtzeit bekannt. Somit kann das Korrektursignal ohne weitere Maßnahmen synchron ausgegeben werden. Dies gilt insbesondere bei bekannten Übertragungswegen des künstlich erzeugten Geräuschs in die Fahrgastzelle des Kraftfahrzeugs. Eine Regelung des Korrektursignals ist somit nicht notwendig.

Gemäß der Erfindung wird das Korrektursignal mittels Schallerfassungsmitteln bestimmt, die ein Schallsignal erfassen. Mit Hilfe der Schallerfassungsmittel wird der Teil des Geräuschs bestimmt, der in die Fahrgastzelle des Kraftfahrzeugs eingeleitet wird. Dadurch wird eine präzise Bestimmung des Korrektursignals und damit eine präzise Beeinflussung bzw. Modifikation des Geräuschs ermöglicht.

Gemäß einem Ausführungsbeispiel, das nicht Teil der Erfindung ist, wird das Korrektursignal so bestimmt, dass das Geräusch in der Fahrgastzelle im Wesentlichen aufgehoben wird.

Durch diese Maßnahme wird eine gute akustische Trennung eines Fahrzeuginnengeräuschs und eines künstlichen Außengeräuschs des elektrisch betriebenen Kraftfahrzeugs erreicht. Somit können die in der Nähe befindlichen Personen vor dem herannahenden Kraftfahrzeug durch ein künstlich erzeugtes Außengeräusch gewarnt werden. Gleichzeitig wird der volle Fahrkomfort aufrechterhalten, da das außerhalb der Fahrgastzelle erzeugte Geräusch in der Fahrgastzelle im Wesentlichen aufgehoben wird.

In einer weiteren Ausführungsform wird das Korrektursignal auf der Grundlage eines Faktors bestimmt, der die Verstärkung des Geräuschs in der Fahrgastzelle herstellt.

Durch diese Maßnahme kann die Intensität der Geräuschverstärkung individuell durch den Hersteller des Kraftfahrzeugs oder den Fahrer des Kraftfahrzeugs vorgegeben werden. Des Weiteren ist es auch möglich, den Faktor über ein Fahrerassistenzsystem automatisch einzustellen. Beispielsweise kann das Fahrerassistenzsystem bei Erkennen einer Gefahrensituation eine Verstärkung des Geräuschs einstellen, wohingegen in einem Normalbetrieb des Kraftfahrzeugs das Geräusch in der Fahrgastzelle im Wesentlichen aufgehoben wird.

Gemäß einem Ausführungsbeispiel, das nicht Teil der Erfindung ist, wird das Korrektursignal abgeschaltet, um das Geräusch in die Fahrgastzelle zu übertragen.

Die Abschaltung des Korrektursignals kann dabei manuell durch den Fahrer oder auch automatisch z.B. durch das Fahrerassistenzsystem erfolgen. Beispielsweise kann das Korrektursignal abgeschaltet werden, um den Fahrer bei einer drohenden Kollision mit einem Fußgänger durch das aktive Außengeräusch zusätzlich zu warnen. Eine Abschaltung kann auch außerhalb von Gefahrensituationen in anderen spezifischen Situationen genutzt werden, um dem Fahrer akustische Hinweise zu übermitteln. Dies kann zum Beispiel auf den Fahrzeugstart zutreffen, der durch eine Abschaltung des Korrektursignals dem Fahrer akustisch bestätigt wird.

Gemäß der Erfindung weist die Vorrichtung ferner ein Steuergerät auf, das zum Erzeugen des Korrektursignals mit den Korrektursignalmitteln gekoppelt ist und das zum Bestimmen des Korrektursignals mit einer zentralen Steuereinheit koppelbar ist, die mit der Schallquelle verbunden ist.

Durch die elektrische Kopplung des Steuergeräts mit der zentralen Steuereinheit können dem Steuergerät Daten zur Verfügung gestellt werden, die zur Erzeugung des Außengeräuschs verwendet werden. Dies ermöglicht eine sehr einfache und zeitsynchrone Bestimmung des Korrektursignals. Bei bekannten Übertragungswegen des Geräuschs in die Fahrgastzelle des Kraftfahrzeugs kann das Korrektursignal ohne aufwändige Verarbeitung ausgegeben werden.

Gemäß einer weiteren Ausführungsform der Vorrichtung weisen die Korrektursignalmittel einen Aktor zum Erzeugen von mechanischen Schwingungen und/oder einen Lautsprecher auf.

Durch die Verwendung eines Aktors kann die Übertragung des Geräuschs in die Fahrgastzelle sehr effizient und platzsparend direkt an der Schallquelle bzw. an der schallweiterleitenden Struktur des Kraftfahrzeugs modifiziert werden. Des Weiteren können Lautsprecher innerhalb oder außerhalb der Fahrgastzelle angeordnet sein, um das Korrektursignal zu erzeugen. Werden die Lautsprecher zusätzlich zu dem Aktor verwendet, so kann die Übertragung des Geräuschs in die Fahrgastzelle noch wirksamer beeinflusst werden.

Von besonderem Vorzug ist es, wenn die erfindungsgemäße Vorrichtung zum Bestimmen des Korrektursignals ferner Schallerfassungsmittel aufweist, die in der Fahrgastzelle oder an der schallweiterleitenden Struktur angeordnet sind und die dazu eingerichtet sind, ein von dem Geräusch verursachtes Schallsignal zu erfassen.

Mit Hilfe der Schallerfassungsmittel kann ein Regelkreis gebildet werden, der die Übertragung des Geräuschs in die Fahrgastzelle präzise regelt. Das erzeugte Korrektursignal wird in diesem Fall in Kombination mit Korrekturfaktoren bestimmt.

In einer weiteren alternativen Ausführungsform weist die Vorrichtung Schallerfassungsmittel auf und ist außerdem mit der zentralen Steuereinheit gekoppelt. Somit wird das Korrektursignal auf der Grundlage der Daten aus der zentralen Steuereinheit und des Schallsignals, das von den Schallerfassungsmitteln erfasst wird, bestimmt. Infolgedessen kann das Geräusch noch genauer modifiziert werden.

In einer weiteren Ausführungsform der Vorrichtung weisen die Schallerfassungsmittel ein Mikrofon und/oder einen Körperschallsensor auf.

Durch diese Maßnahme kann das von dem Geräusch verursachte Schallsignal an unterschiedlichen Stellen im Kraftfahrzeug erfasst werden. Dabei kann der Körperschallsensor beispielsweise an der schallweiterleitenden Struktur des Kraftfahrzeugs angeordnet sein. Außerdem kann das Mikrofon in der Fahrgastzelle des Kraftfahrzeugs angeordnet sein. Dadurch wird eine einfache und effektive Regelung des Korrektursignals ermöglicht.

Gemäß einem Ausführungsbeispiel, das nicht Teil der Erfindung ist, weist die Vorrichtung zum Abschalten des Korrektursignals ferner einen Schalteingang auf.

Dieser Schalteingang kann entweder manuell über den Fahrer oder automatisch, beispielsweise über das Fahrerassistenzsystem, gesteuert werden. Durch das einfache Zu- oder Abschalten des Korrektursignals kann eine zusätzliche Fahrerwarnung bei drohenden Verkehrsunfällen realisiert werden. Außerdem kann der Fahrer selbst entscheiden, in welchem Umfang er das außerhalb der Fahrgastzelle erzeugte Geräusch wahrnehmen möchte.

In einer weiteren Ausführungsform ist die Schallquelle ein Schwingungserzeuger, insbesondere ein Lautsprecher, eine elektrische Maschine und/oder ein Nebenaggregat des Kraftfahrzeugs.

Erfindungsgemäß kann somit die Geräuschübertragung beliebiger Schallquellen in die Fahrgastzelle modifiziert werden, d.h. es werden auch Geräusche modifiziert, die durch eine gezielte Ansteuerung der elektrischen Maschine oder eines Nebenaggregats des Kraftfahrzeugs erzeugt werden.

Es versteht sich, dass die Merkmale, Eigenschaften und Vorteile der erfindungsgemäßen Vorrichtung auch entsprechend auf das erfindungsgemäße Verfahren zutreffen bzw. anwendbar sind.

Außerdem sind die vorstehend genannten und die nachstehend noch zu erläuternden Merkmale nicht nur in der jeweils angegebenen Kombination, sondern auch in anderen Kombinationen oder in Alleinstellung verwendbar, ohne den in dem Anspruchssatz definierten Rahmen der Erfindung zu verlassen.

### Kurze Beschreibung der Zeichnungen

Fig. 1 zeigt in schematischer Form eine Fahrgastzelle eines Kraftfahrzeugs und eine Ausführungsform einer erfindungsgemäßen Vorrichtung mit Korrektursignalmitteln;
Fig. 2 zeigt in schematischer Form eine außerhalb der Fahrgastzelle angeordnete Schallquelle und eine weitere Ausführungsform der erfindungsgemäßen Vorrichtung mit Korrektursignalmitteln; und
Fig. 3 zeigt ein Diagramm zur Erläuterung einer Ausführungsform eines erfindungsgemäßen Verfahrens.

### Ausführungsformen der Erfindung

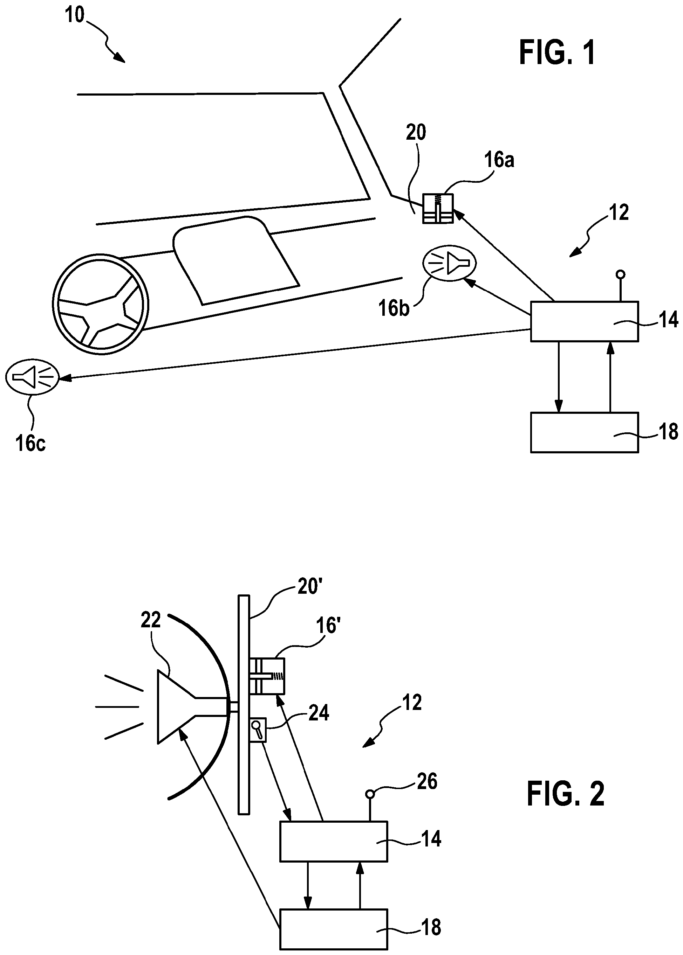

Fig. 1 zeigt in schematischer Form eine Fahrgastzelle 10 eines Kraftfahrzeugs und eine Ausführungsform einer erfindungsgemäßen Vorrichtung 12. Im vorliegenden Fall ist das Kraftfahrzeug ein rein elektrisch angetriebenes Fahrzeug. Alternativ kann das Kraftfahrzeug auch ein Fahrzeug mit Hybridantrieb oder ein konventionell angetriebenes Fahrzeug sein. Die Vorrichtung 12 weist ein Steuergerät 14 auf, das mit Korrektursignalmitteln 16, im vorliegenden Fall einem Aktor 16a und Lautsprechern 16b, 16c, elektrisch gekoppelt ist. Des Weiteren ist das Steuergerät 14 mit einer zentralen Steuereinheit 18 elektrisch gekoppelt.

Rein elektrisch angetriebene Fahrzeuge zeichnen sich dadurch aus, dass sie ein deutlich leiseres Fahr- und Betriebsgeräusch als konventionell angetriebene Fahrzeuge erzeugen. Daraus ergibt sich jedoch eine potenzielle Gefährdung für andere Verkehrsteilnehmer, da sie das herannahende elektrisch angetriebene Fahrzeug nicht rechtzeitig wahrnehmen. Aus diesem Grund wird von dem Kraftfahrzeug ein Geräusch außerhalb der Fahrgastzelle 10 erzeugt, um Fußgänger, Radfahrer oder andere Verkehrsteilnehmer vor dem herannahenden Kraftfahrzeug zu warnen. Das Geräusch wird in dem vorliegenden Fall durch eine in Fig. 1 nicht näher bezeichnete elektrische Maschine des Kraftfahrzeugs erzeugt, die zu diesem Zweck gezielt von der zentralen Steuereinheit 18 angesteuert wird. Das außerhalb der Fahrgastzelle 10 ausgegebene Geräusch wird jedoch ebenfalls in die Fahrgastzelle 10 eingeleitet und mindert dadurch den Fahrkomfort. Erfindungsgemäß wird deshalb von der Vorrichtung 12 ein Korrektursignal erzeugt, das das Geräusch, das in die Fahrgastzelle 10 eingeleitet wird, dämpft bzw. im Wesentlichen aufhebt. Bei der Übertragung des Geräuschs in die Fahrgastzelle 10 ist zu unterscheiden, ob das Geräusch über mehrere Wege in die Fahrgastzelle 10 eingeleitet wird (über Luft und/oder Körperschall) oder ob eine einzelne Fahrzeugstruktur vorhanden ist, die wesentlich zur Geräuschübertragung in die Fahrgastzelle 10 verantwortlich ist. Im vorliegenden Beispiel wird angenommen, dass sich das Geräusch über mehrere Wege in die Fahrgastzelle 10 fortpflanzt. Aus diesem Grund werden die Lautsprecher 16b, 16c innerhalb der Fahrgastzelle 10 und der Aktor 16a an einer schallweiterleitenden Struktur 20 in der Nähe der Fahrgastzelle 10 angeordnet. Alternativ können die Korrektursignalmittel 16 auch in der Nähe der elektrischen Maschine angeordnet sein. Das Korrektursignal wird von dem Steuergerät 14 auf der Grundlage von Daten bestimmt, die von der zentralen Steuereinheit 18 zur Verfügung gestellt werden. Die Daten weisen beispielsweise Informationen über das Ansteuerverfahren zum Erzeugen des Geräuschs und den Fahrzeugzustand auf. In dem vorliegenden Beispiel wird davon ausgegangen, dass die Übertragungswege des Geräuschs in die Fahrgastzelle 10 bekannt sind. Aufgrund der von der zentralen Steuereinheit 18 zur Verfügung gestellten Daten und der bekannten Übertragungswege ist das in die Fahrgastzelle 10 eingeleitete Geräusch hinreichend in Echtzeit bekannt. Das Korrektursignal kann damit ohne weitere aufwändige Maßnahmen zeitsynchron mittels der Korrektursignalmittel 16 ausgegeben werden; d.h. eine Regelung des Korrektursignals ist nicht notwendig. Dadurch kann das erzeugte Geräusch direkt bei der Entstehung aufgehoben werden.

Des Weiteren kann die Intensität der Dämpfung des Geräuschs variiert werden. Dies erfolgt beispielsweise durch ein entsprechendes Ansteuern des Steuergeräts 14 durch die zentrale Steuereinheit 18. Alternativ kann das Steuergerät 14 zum Einstellen des Dämpfungsgrads auch mit einer anderen Komponente gekoppelt sein. Außerdem kann die zentrale Steuereinheit 18 durch entsprechende Ansteuerung des Steuergeräts 14 die Erzeugung des Korrektursignals abschalten, um das Geräusch in die Fahrgastzelle 10 einzuleiten und damit den Fahrer vor einer Gefahrensituation zu warnen. Alternativ kann die zentrale Steuereinheit 18 das Steuergerät 14 derart ansteuern, dass das Geräusch verstärkt in die Fahrgastzelle 10 eingeleitet wird. Damit kann der Warneffekt vor einer Gefahrensituation weiter erhöht werden.

Somit wird durch die erfindungsgemäße Vorrichtung 12 der Fahrkomfort und gleichzeitig die Sicherheit erhöht. Außerdem trägt die Vorrichtung 12 zur Kosteneinsparung bei, da Maßnahmen zur passiven akustischen Dämmung eingespart werden können.

Fig. 2 zeigt in schematischer Form eine Schallquelle 22 und eine weitere Ausführungsform der erfindungsgemäßen Vorrichtung 12. Die Schallquelle 22 ist in diesem Ausführungsbeispiel ein Lautsprecher 22, der außerhalb der in Fig. 2 nicht gezeigten Fahrgastzelle 10 angeordnet ist. Die Vorrichtung 12 weist das Steuergerät 14, Korrektursignalmittel 16', im vorliegenden Fall einen Aktor 16', und Schallerfassungsmittel 24, im vorliegenden Fall ein Mikrofon 24, auf. In einer alternativen Ausführungsform können die Schallerfassungsmittel 24 auch einen Körperschallsensor aufweisen. Das Steuergerät 14 ist elektrisch mit dem Aktor 16' und dem Mikrofon 24 gekoppelt. Außerdem weist das Steuergerät 14 einen Schalteingang 26 auf. Des Weiteren ist das Steuergerät 14 mit der zentralen Steuereinheit 18 elektrisch gekoppelt.

Im vorliegenden Ausführungsbeispiel wird das Geräusch, das die anderen Verkehrsteilnehmer vor dem herannahenden elektrisch angetriebenen Fahrzeug warnt, von dem Lautsprecher 22 ausgegeben. Dazu wird der Lautsprecher 22 geeignet von der zentralen Steuereinheit 18 angesteuert. Alternativ kann das Geräusch auch durch eine gezielte Ansteuerung von Nebenaggregaten des Kraftfahrzeugs erzeugt werden. Um das in die Fahrgastzelle 10 eingeleitete Geräusch zu modifizieren, wird das Korrektursignal durch das Steuergerät 14 bestimmt und mittels der Korrektursignalmittel 16' ausgegeben. Zur Bestimmung des Korrektursignals werden zum einen die Daten genutzt, die von der zentralen Steuereinheit 18 zur Verfügung gestellt werden und die zur Erzeugung des Geräuschs mittels des Lautsprechers 22 verwendet werden. Zum anderen werden die Schallerfassungsmittel 24 verwendet, die ein von dem Geräusch verursachtes Schallsignal erfassen. Dazu ist das Mikrofon 24 an einer schallweiterleitenden Struktur 20' angeordnet, die wesentlich für die Übertragung des Geräuschs in die Fahrgastzelle 10 verantwortlich ist. Das Korrektursignal wird somit auf der Grundlage der Daten aus der zentralen Steuereinheit 18 und des erfassten Schallsignals unter Anwendung von Korrekturfaktoren bestimmt. Das Korrektursignal wird anschließend mittels des Aktors 16' ausgegeben, um das in die Fahrgastzelle 10 eingeleitete Geräusch zu modifizieren. Dazu ist der Aktor 16' ebenfalls an der schallweiterleitenden Struktur 20' angeordnet, um die Übertragung des Geräuschs in die Fahrgastzelle 10 möglichst wirksam beeinflussen zu können.

Durch die Schallerfassungsmittel 24 wird in diesem Ausführungsbeispiel ein Regelkreis gebildet, der eine sehr präzise Modifikation des in die Fahrgastzelle 10 eingeleiteten Geräuschs erlaubt.

Das Steuergerät 14 kann außerdem Informationen über das bestimmte Korrektursignal an die zentrale Steuereinheit 18 weiterleiten, die diese Informationen beispielsweise für die Ansteuerung des Lautsprechers 22 verwendet.

Über den Schalteingang 26 des Steuergeräts 14 kann die Erzeugung des Korrektursignals entweder manuell durch den Fahrer des Kraftfahrzeugs oder auch automatisch durch ein mit dem Schalteingang 26 gekoppeltes Fahrerassistenzsystem abgeschaltet und wieder eingeschaltet werden. Alternativ kann der Schalteingang 26 für das Ab- und Zuschalten des Korrektursignals auch mit der zentralen Steuereinheit 18 gekoppelt sein. Beispielsweise kann das Korrektursignal ausgeschaltet werden, um das Geräusch in die Fahrgastzelle 10 einzuleiten und damit den Fahrer vor einer drohenden Kollision mit einem anderen Verkehrsteilnehmer zu warnen. Zu diesem Zweck kann das Geräusch sogar verstärkt in die Fahrgastzelle 10 eingeleitet werden. Dazu wird von der Vorrichtung 12 das Korrektursignal derart erzeugt, dass das Geräusch innerhalb der Fahrgastzelle 10 verstärkt wird.

Des Weiteren kann der Grad der Dämpfung bzw. Verstärkung des in die Fahrgastzelle 10 eingeleiteten Geräuschs durch den Hersteller oder Fahrer des Fahrzeugs vorgegeben werden. Hierfür werden beispielsweise entsprechende Modifikationen der Daten der zentralen Steuereinheit 18 vorgenommen. Die zentrale Steuereinheit 18 stellt diese Daten dem Steuergerät 14 zur Verfügung, das auf der Grundlage dieser Daten die Erzeugung des Korrektursignals steuert.

Außerdem kann die erfindungsgemäße Vorrichtung 12 mit weiteren passiven Maßnahmen zur akustischen Dämmung kombiniert werden. So können beispielsweise schalllenkende Bleche an dem Kraftfahrzeug angeordnet sein, um einen Bereich außerhalb der Fahrgastzelle 10 akustisch von einem Bereich innerhalb der Fahrgastzelle 10 zu trennen.

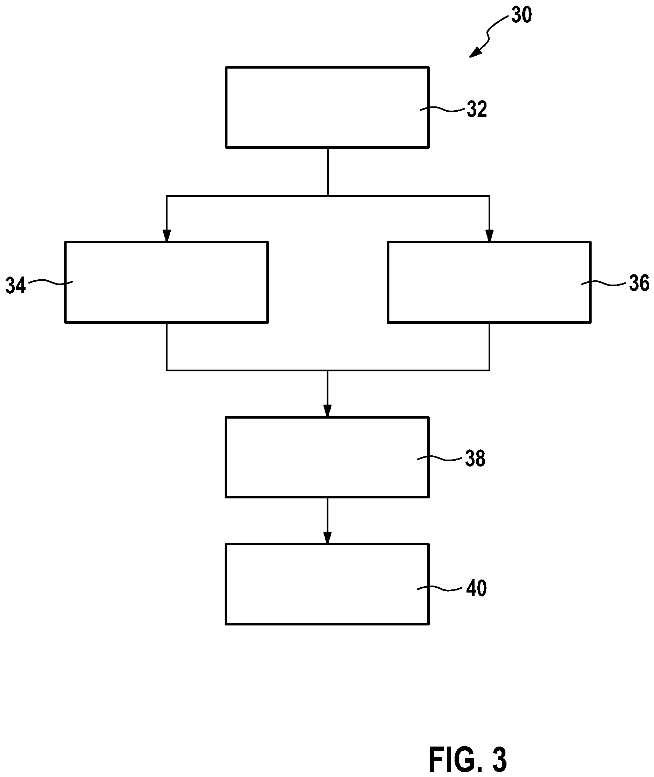

Fig. 3 zeigt ein Diagramm zur Erläuterung einer Ausführungsform eines erfindungsgemäßen Verfahrens 30.

In einem Schritt 32 wird zunächst das Geräusch von der außerhalb der Fahrgastzelle 10 angeordneten Schallquelle 22 erzeugt, um andere Verkehrsteilnehmer vor dem herannahenden elektrisch angetriebenen Kraftfahrzeug zu warnen.

In einem weiteren Schritt 34 werden von dem Steuergerät 14 die Daten erfasst, die von der zentralen Steuereinheit 18 zur Verfügung gestellt werden. Die Daten weisen beispielsweise Informationen über das geplante Ansteuerverfahren auf, das zur Erzeugung des Geräuschs benutzt wird. Des Weiteren können die Daten einen Dämpfungs- oder Verstärkungsgrad aufweisen, der auf das in die Fahrgastzelle 10 eingeleitete Geräusch angewendet wird. Außerdem können die Daten Informationen zum Zustand des Kraftfahrzeugs aufweisen, wie z.B. die Geschwindigkeit des Kraftfahrzeugs. Infolgedessen kann die Dämpfung oder Verstärkung des in die Fahrgastzelle 10 eingeleiteten Geräuschs z.B. geschwindigkeitsabhängig gestaltet werden.

In einem Schritt 36 wird mittels der Schallerfassungsmittel 24 das von dem Geräusch verursachte Schallsignal erfasst und dem Steuergerät 14 zur Verfügung gestellt. Die Schallerfassungsmittel 24 werden dazu vorzugsweise in der Fahrgastzelle 10 oder an der schallweiterleitenden Struktur 20 angeordnet. Mit Hilfe der Schallerfassungsmittel 24 wird ein Regelkreis zur Regelung des Korrektursignals gebildet.

In einem anschließenden Schritt 38 wird das Korrektursignal auf der Grundlage der Daten der zentralen Steuereinheit 18 und des erfassten Schallsignals in Kombination mit Korrekturfaktoren bestimmt.

Alternativ können zur Bestimmung des Korrektursignals auch nur die Daten der zentralen Steuereinheit 18 herangezogen werden. Somit kann in dieser Ausführungsform auf die Schallerfassungsmittel 24 verzichtet werden.

In einer weiteren alternativen Ausführungsform wird das Korrektursignal lediglich auf der Grundlage des erfassten Schallsignals gebildet. Die Daten der zentralen Steuereinheit 18 werden in dieser alternativen Ausführungsform nicht berücksichtigt.

In dem vorliegenden Ausführungsbeispiel wird das Korrektursignal so bestimmt, dass das Geräusch in der Fahrgastzelle 10 im Wesentlichen aufgehoben wird.

In einer alternativen Ausführungsform kann das Korrektursignal so bestimmt werden, dass das Geräusch in der Fahrgastzelle 10 nur teilweise gedämpft oder auch verstärkt wird. Des Weiteren ist es möglich, die Dämpfung oder Verstärkung des Geräuschs in der Fahrgastzelle 10 dynamisch während des Fahrbetriebs in Abhängigkeit verschiedener Fahrzustände einzustellen. So können beispielsweise Gefahrensituationen oder auch die Geschwindigkeit des Kraftfahrzeugs die Dämpfung oder Verstärkung des Geräuschs in der Fahrgastzelle 10 beeinflussen.

In einem Schritt 40 wird schließlich das Korrektursignal mittels der Korrektursignalmittel 16 ausgegeben. Dabei kann die Erzeugung des Korrektursignals abschaltbar sein, um das Geräusch in die Fahrgastzelle 10 zu übertragen und damit den Fahrer vor einer Gefahrensituation zu warnen.

Mit Hilfe des erfindungsgemäßen Verfahrens 30 wird es ermöglicht, andere Verkehrsteilnehmer mittels des außerhalb der Fahrgastzelle 10 erzeugten Geräuschs auf das elektrisch angetriebene Fahrzeug aufmerksam zu machen und gleichzeitig einen hohen Fahrkomfort zu gewährleisten, indem das in die Fahrgastzelle 10 eingeleitete Geräusch im Wesentlichen aufgehoben wird. Darüber hinaus erhöht das erfindungsgemäße Verfahren 30 die Sicherheit des Kraftfahrzeugs, indem das Geräusch beispielsweise in Gefahrensituationen nur schwach gedämpft oder sogar verstärkt in die Fahrgastzelle 10 eingeleitet wird. Des Weiteren entstehen Kostenvorteile, da durch die vorliegende Erfindung passive Maßnahmen zur akustischen Dämmung eingespart werden können.

Obgleich somit bevorzugte Ausführungsformen der erfindungsgemäßen Vorrichtung und des erfindungsgemäßen Verfahrens gezeigt worden sind, versteht sich, dass verschiedene Abwandlungen und Modifikationen vorgenommen werden können, ohne den in dem Anspruchssatz definierten Rahmen der Erfindung zu verlassen.

Beispielsweise kann das erfindungsgemäße Verfahren bzw. die erfindungsgemäße Vorrichtung auch für konventionell angetriebene Fahrzeuge angewendet werden. Hierbei wird das in die Fahrgastzelle des Kraftfahrzeugs eingeleitete Geräusch, das von einer beliebigen außerhalb der Fahrgastzelle angeordneten Schallquelle erzeugt wird, modifiziert.

## Patentansprüche

1. Verfahren (30) zum Verstärken eines in eine Fahrgastzelle (10) eines Kraftfahrzeugs, insbesondere eines elektrisch angetriebenen Kraftfahrzeugs, eingeleiteten Geräuschs, das von einer außerhalb der Fahrgastzelle (10) angeordneten Schallquelle (22) als Lautsprecher erzeugt wird (32), wobei ein Korrektursignal mittels Korrektursignalmitteln (16), die der Schallquelle (22) und/oder einer schallweiterleitenden Struktur (20) des Kraftfahrzeugs zugeordnet sind, erzeugt wird (40), und wobei das Korrektursignal so bestimmt wird (38), dass das Geräusch verstärkt in die Fahrgastzelle (10) eingeleitet wird und das Korrektursignal mittels Schallerfassungsmitteln (24) bestimmt wird (38), die ein von dem Geräusch verursachtes Schallsignal erfassen.

2. Verfahren nach Anspruch 1, wobei das Korrektursignal auf der Grundlage von Daten einer zentralen Steuereinheit (18) bestimmt wird (38), die zum Steuern der Schallquelle (22) verwendet werden.

3. Verfahren nach einem der Ansprüche 1 oder 2, wobei das Korrektursignal auf der Grundlage eines Faktors bestimmt wird (38), der die Dämpfung oder Verstärkung des Geräuschs in der Fahrgastzelle (10) einstellt.

4. Verfahren nach einem der Ansprüche 1 bis 3, wobei das Geräusch während einer Gefahrensituation verstärkt in die Fahrgastzelle (10) eingeleitet wird.

5. Vorrichtung (12) zum Verstärken eines in eine Fahrgastzelle (10) eines Kraftfahrzeugs, insbesondere eines elektrisch angetriebenen Kraftfahrzeugs, eingeleiteten Geräuschs, mit Korrektursignalmitteln (16), die einer außerhalb der Fahrgastzelle (10) angeordneten Schallquelle (22) und/oder einer schallweiterleitenden Struktur (20) des Kraftfahrzeugs zugeordnet sind, wobei die Korrektursignalmittel (16) dazu eingerichtet sind, ein Korrektursignal derart zu erzeugen, dass das von der Schallquelle (22) erzeugte Geräusch verstärkt in die Fahrgastzelle (10) eingeleitet wird und die Vorrichtung (12) die Schallquelle (22) als Lautsprecher umfasst, das außerhalb der Fahrgastzelle (10) anordenbar ist und die Vorrichtung (12) ferner ein Steuergerät (14)'aufweist, das zum Erzeugen des Korrektursignals mit den Korrektursignalmitteln (16) gekoppelt ist, und das zum Bestimmen des Korrektursignals mit einer zentralen Steuereinheit (18) koppelbar ist, die mit der Schallquelle (22) verbindbar ist und die Vorrichtung (12) zum Bestimmen des Korrektursignals ferner Schallerfassungsmittel (24) aufweist, die in der Fahrgastzelle (10) oder an der schallweiterleitenden Struktur (20) anordenbar sind, und die dazu eingerichtet sind, ein von dem Geräusch verursachtes Schallsignal zu erfassen.

6. Vorrichtung nach Anspruch 5, wobei die Korrektursignalmittel (16) einen Aktor zum Erzeugen von mechanischen Schwingungen und/oder einen Lautsprecher aufweisen.

7. Vorrichtung nach Anspruch 5 oder 6, wobei die Schallerfassungsmittel (24) ein Mikrophon und/oder einen Körperschallsensor aufweisen.

## Claims

1. Method (30) for amplifying a sound introduced into a passenger compartment (10) of a motor vehicle, in particular an electrically driven motor vehicle, that is produced (32) by a sound source (22) arranged outside the passenger compartment (10) as a loudspeaker, wherein a correction signal is produced (40) by means of correction signal means (16) that are associated with the sound source (22) and/or with a sound-forwarding structure (20) of the motor vehicle, and wherein the correction signal is determined (38) such that the sound is introduced into the passenger compartment (10) in amplified fashion and the correction signal is determined (38) by means of sound capture means (24) that capture a sound signal caused by the sound.

2. Method according to Claim 1, wherein the correction signal is determined (38) on the basis of data of a central control unit (18) that are used to control the sound source (22).

3. Method according to either of Claims 1 and 2,
wherein the correction signal is determined (38) on the basis of a factor that sets the attenuation or gain for the sound in the passenger compartment (10) .

4. Method according to one of Claims 1 to 3,
wherein the sound is introduced into the passenger compartment (10) in amplified fashion during a hazard situation.

5. Apparatus (12) for amplifying a sound introduced into a passenger compartment (10) of a motor vehicle, in particular an electrically driven motor vehicle, having correction signal means (16) that are associated with a sound source (22) arranged outside the passenger compartment (10) and/or with a sound-forwarding structure (20) of the motor vehicle, wherein the correction signal means (16) are set up to produce a correction signal such that the sound produced by the sound source (22) is introduced into the passenger compartment (10) in amplified fashion and the apparatus (12) comprises the sound source (22) as a loudspeaker that is arrangeable outside the passenger compartment (10), and the apparatus (12) further has a controller (14) that is coupled to the correction signal means (16) to produce the correction signal and that is couplable to a central control unit (18), which is connectable to the sound source (22), to determine the correction signal, and the apparatus (12), to determine the correction signal, further has sound capture means (24) that are arrangeable in the passenger compartment (10) or on the sound-forwarding structure (20) and that are set up to capture a sound signal caused by the sound.

6. Apparatus according to Claim 5, wherein the correction signal means (16) have an actuator for producing mechanical vibrations and/or a loudspeaker.

7. Apparatus according to Claim 5 or 6, wherein the sound capture means (24) have a microphone and/or a structure-borne sound sensor.

## Revendications

1. Procédé (30) d'amplification d'un bruit émis dans un habitacle (10) d'un véhicule automobile, notamment d'un véhicule automobile à moteur électrique, lequel bruit est produit (32) par une source sonore (22) sous forme de haut-parleurs, placée à l'extérieur de l'habitacle (10), dans lequel un signal de correction est produit (40) à l'aide de moyens générateurs de signal de correction (16), qui sont associés à la source sonore (22) et/ou à une structure de transfert du son (20) du véhicule automobile, et dans lequel le signal de correction est déterminé (38) de manière à ce que le bruit soit émis de manière amplifiée dans l'habitacle (10) et à ce que le signal de correction soit déterminé (38) à l'aide de moyens de détection du son (24), qui détectent un signal sonore provoqué par le bruit.

2. Procédé selon la revendication 1, dans lequel le signal de correction est déterminé (38) sur la base de données d'une unité centrale de commande (18) qui est utilisée pour commander la source sonore (22).

3. Procédé selon l'une quelconque des revendications 1 ou 2, dans lequel le signal de correction est déterminé (38) sur la base d'un facteur qui règle l'atténuation ou l'amplification du bruit dans l'habitacle (10).

4. Procédé selon l'une quelconque des revendications 1 à 3, dans lequel le bruit est émis dans l'habitacle (10) au cours d'une situation de danger.

5. Dispositif (12) d'amplification d'un bruit émis dans un habitacle (10) d'un véhicule automobile, notamment d'un véhicule automobile à moteur électrique, comportant des moyens générateurs de signal de correction (16) qui sont associés à une source sonore (22) placée à l'extérieur de l'habitacle (10) et/ou à une structure de transfert du son (20) du véhicule automobile, dans lequel les moyens générateurs de signal de correction (16) sont conçus pour produire un signal de correction de manière à ce que le bruit produit par la source sonore (22) soit émis de manière amplifiée dans l'habitacle (10), et le dispositif (12) comprend la source sonore (22) sous forme de haut-parleur, qui peut être placée à l'extérieur de l'habitacle (10), et le dispositif (12) comporte en outre un appareil de commande (14) qui est couplé aux moyens générateurs de signal de correction (16) pour produire le signal de correction et qui peut être couplé à une unité centrale de commande (18) pouvant être reliée à la source sonore (22) pour déterminer le signal de correction, et le dispositif (12), pour déterminer le signal de correction, comporte en outre des moyens de détection du son (24) pouvant être placés dans l'habitacle (10) ou sur la structure de transfert du son (20) et qui sont conçus pour détecter un signal sonore provoqué par le bruit.

6. Dispositif selon la revendication 5, dans lequel les moyens générateurs de signal de correction (16) comportent un actionneur destiné à produire des oscillations mécaniques et/ou un haut-parleur.

7. Dispositif selon la revendication 5 ou 6, dans lequel les moyens de détection du son (24) comportent un microphone et/ou un capteur de bruit de structure.
